**Europäisches Patentamt**

(19) **European Patent Office**

**Office européen des brevets**

(11) Veröffentlichungsnummer: **0 006 622**
**B1**

(12) **EUROPÄISCHE PATENTSCHRIFT**

(45) Veröffentlichungstag der Patentschrift:
06.06.84

(51) Int. Cl.³: **H 03 K 17/62**, H 04 N 5/22,
H 04 H 7/00

(21) Anmeldenummer: **79102162.9**

(22) Anmeldetag: **28.06.79**

(54) Schaltungsanordnung zum wahlweisen Durchschalten oder Sperren von Signalen hoher Bandbreite.

(30) Priorität: **29.06.78  DE 2828662**

(43) Veröffentlichungstag der Anmeldung:
**09.01.80 Patentblatt 80/1**

(45) Bekanntmachung des Hinweises auf die Patenterteilung:
**06.06.84 Patentblatt 84/23**

(84) Benannte Vertragsstaaten:
**AT BE CH DE FR GB IT NL**

(56) Entgegenhaltungen:
**CA - A - 868 572**
**DE - A - 2 603 644**
**DE - B - 1 562 287**

(73) Patentinhaber: **SIEMENS AKTIENGESELLSCHAFT,**
**Berlin und München Wittelsbacherplatz 2,**
**D-8000 München 2 (DE)**

(72) Erfinder: **Leysieffer, Hans, Dr.-Ing., Zugspitzweg 13,**
**D-8021 Icking (DE)**
Erfinder: **Panzer, Klaus, Dr.-Ing., Strassberger**
**Strasse 47, D-8000 München 40 (DE)**

## Beschreibung

Die Erfindung bezieht sich auf eine Schaltungsanordnung zum wahlweisen Durchschalten oder Sperren von Signalen hoher Bandbreite mit Hilfe wenigstens eines elektronischen Schalters, wobei dem elektronischen Schalter bzw. wenigstens einem der elektronischen Schalter ein Modulator vorgeschaltet ist, mit dessen Hilfe ein Träger durch die Signale derart moduliert wird, daß die Information im Zeitpunkt des Nulldurchganges des Trägers liegt.

Eine derartige Schaltungsanordnung ist bereits aus der DE-B-1 562 287 bekannt. Die bekannte Schaltungsanordnung dient zum selektiven Durchschalten einer mit einem Informationssignal modulierten Träger-Wechselspannung auf einen von mehreren Ausgangskanälen. Bei der Modulation kann es sich dabei um eine Frequenz-, Phasen- oder Amplitudenmodulation handeln. Als elektronische Schalter dienen sogenannte aktive Verstärker-Torschaltungen, d. h. Verstärkerschaltungen, die sich durch ein Steuersignal ein- oder ausschalten lassen. Mit einer derartigen Schaltungsanordnung ist es jedoch nicht ohne weiteres möglich, Signale hoher Bandbreite durchzuschalten oder zu sperren. Um die Forderungen nach Linearität und Übersprechdämpfung erfüllen zu können, sind vielmehr spezielle und relativ aufwendige Schaltungen gebräuchlich.

Ferner ist z. B. aus der DE-B-2 121 611 ein Kreuzschienenverteiler für Videosignale bekannt. Beim Aufbau eines derartigen Verteilers müssen wegen der großen Bandbreite der zu übertragenden Signale im allgemeinen besondere Maßnahmen getroffen werden, um die Forderungen hinsichtlich geringer nichtlinearer Verzerrungen und einer hohen Übersprechdämpfung zu erfüllen.

Sieht man von mechanischen Schaltern als Koppelpunkte ab, so kann man einen Kreuzschienenverteiler z. B. mit aktiven Koppelpunkten und entsprechenden Ansteuerschaltungen aufbauen. Für derartige Videokoppelpunkte sind spezielle Schaltkreise notwendig, um die genannten Forderungen an Linearität und Übersprechdämpfung halten zu können.

Aufgabe der Erfindung ist es daher, eine Schaltungsanordnung der vorstehend näher bezeichneten Art derart auszubilden, daß sie einschließlich der darin enthaltenen elektronischen Schalter mit besonders einfachen Mitteln realisierbar ist.

Gemäß der Erfindung wird die Schaltungsanordnung zur Lösung dieser Aufgabe derart ausgebildet, daß der elektronische Schalter als logisches Verknüpfungsglied ausgebildet ist und daß die elektronischen Schalter Koppelpunkte eines Koppelfeldes sind, bei dem Eingangsleitungen über Koppelpunkte mit Ausgangsleitungen wahlweise verbindbar sind.

Durch diese Maßnahmen ergibt sich der Vorteil, daß als Koppelpunkte mit besonders einfachen Mitteln realisierbare elektronische Schalter Verwendung finden und bei dem Aufbau des Koppelfeldes gegenüber vergleichbaren bekannten Anordnungen geringere Anforderungen zu erfüllen sind. Obwohl im Falle einer Modulation der Signale die obere Grenzfrequenz größer ist als in der Originallage, sind die Anforderungen an den Koppelpunkt wesentlich geringer.

Die Signale hoher Bandbreite sind dabei insbesondere Videosignale.

Der Demodulator kann jeweils unmittelbar an die Ausgangsleitung angeschlossen sein. Ist dagegen zwischen dem elektronischen Schalter bzw. der Ausgangsleitung des Koppelfeldes und dem Demodulator jeweils eine Signalübertragungsstrecke gelegen, so kann der Modulator in vorteilhafter Weise zugleich als Sendemodulator für die Signalübertragung dienen.

Ist bei dem Koppelfeld die Anzahl der Ausgangsleitungen größer als die Zahl der Eingangsleitungen bzw. bei einer Programmverteilung die Anzahl der Teilnehmer größer als die Anzahl der Programme, so ergibt sich der weitere Vorteil, daß weniger Modulatoren benötigt werden als dies bei einer Zuordnung von Modulatoren zu den einzelnen Signalübertragungsstrecken der Fall wäre.

In weiterer Ausgestaltung der Erfindung ist der Modulator als Frequenzmodulator ausgebildet. Die frequenzmodulierten Signale werden dabei zweckmäßigerweise über einen optischen Übertragungsweg übertragen, derart, daß das Lichtwellenleiter-Übertragungssystem und die Schaltungsanordnung mit dem gleichen frequenzmodulierten Träger arbeiten. Eine derartige Anordnung ist insbesondere für eine Verteilung von TV-Signalen geeignet.

Weitere vorteilhafte Ausgestaltungen der Erfindung ergeben sich aus den Unteransprüchen 8 bis 11.

Die Erfindung wird anhand der in den Figuren dargestellten Ausführungsbeispiele näher erläutert. Es zeigt

Fig. 1 eine Schaltungsanordnung zur Verteilung von Videosignalen mittels frequenzmodulierter Hilfsträger und

Fig. 2 weitere Einzelheiten einer Schaltungsanordnung nach Fig. 1.

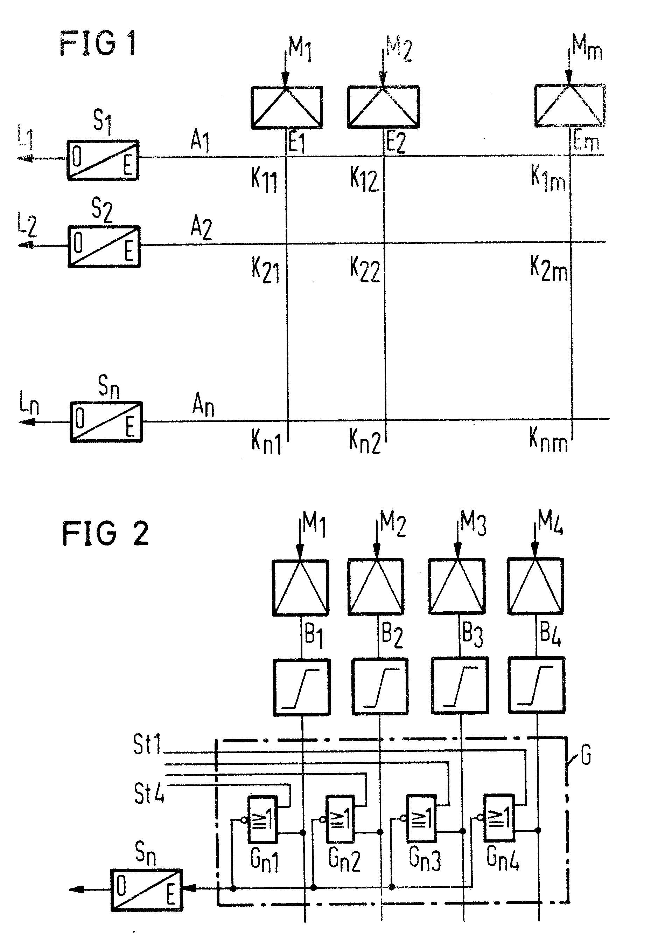

Das in Fig. 1 gezeigte Koppelfeld ist nach Art eines Kreuzschienenverteilers aufgebaut.

Eine Anzahl von m Eingangsleitungen kreuzt eine Zahl von n Ausgangsleitungen. In den Kreuzungspunkten ist eine Anzahl von $n \cdot m$ in der Figur nicht näher dargestellten Koppelpunkten zur wahlweisen Verbindung von Eingangs- mit Ausgangsleitungen vorgesehen. Neben den Kreuzungspunkten sind die Bezeichnungen für die Koppelpunkte, nämlich $K_{11} \ldots K_{nm}$ angegeben.

Dem Eingang $E_1 \ldots E_m$ jeder Eingangsleitung ist ein Modulator $M_1 \ldots M_m$ vorgeschaltet. An jedem Ausgang $A_1 \ldots A_n$ einer Ausgangsleitung ist ein optischer Sender $S_1 \ldots S_n$ angeschlossen, auf den eine optische Leitung $L_1 \ldots L_n$ folgt.

Dadurch, daß nicht das Videosignal selbst, sondern ein mit diesem Signal in der Frequenz modulierter Hilfsträger über den Koppelpunkt geleitet wird, können sehr einfache logische Gatter als Koppelpunkte verwendet werden. Neben der Einfachheit derartiger Koppelpunkte kann der reltiv geringe Leistungsverbrauch von besonderem Vorteil sein.

Ein weiterer Vorteil des Koppelfeldes nach Fig. 1 ist die relativ hohe untere Grenzfrequenz von etwa 5 MHz. Bei einem Videokoppelfeld dagegen liegt die untere Grenzfrequenz bei einigen Hz, so daß sich ein relativ großer Aufwand zur Trennung von Nutz- und Steuersignalen in den Ansteuerschaltungen ergeben kann.

Die Verwendung eines frequenzmodulierten Hilfsträgers kann sich außer im Koppelfeld auch in den optischen Übertragungswegen, z. B. im Hinblick auf geringe nichtlineare Verzerrungen in den lichtemittierenden Dioden und mit Rücksicht auf den Rauschabstand bei einer Übertragung über größere Entfernungen als besonders zweckmäßig erweisen.

Die Verwendung von logischen Verknüpfungsgliedern als Koppelpunkte ist nicht nur bei einem Betrieb mit frequenzmodulierten Signalen von Vorteil. Es sind auch andere Modulationsarten, bei denen die Information im Zeitpunkt des Nulldurchganges eines Trägers liegt, zweckmäßig, insbesondere PFM bzw. Pulsfrequenzmodulation, PM bzw. Phasenmodulation, PPM bzw. Pulsphasenmodulation, PDM bzw. Pulsdauermodulation.

Von den Ausgängen des Koppelfeldes führen zu jedem Teilnehmer eine oder mehrere Verbindungsleitungen in Form einer Glasfaser. Zweckmäßigerweise wird vom Teilnehmer zum zentralen Koppelfeld ein Rückkanal vorgesehen, so daß der Teilnehmer wählen kann, welches von den in der Zentrale zur Verfügung stehenden Breitbandsignalen auf die zu ihm führende Glasfaser geschaltet werden soll.

Fig. 2 zeigt einen Ausschnitt aus dem Koppelfeld nach Fig. 1 im Detail. Den FM-Modulatoren $M_1 \ldots M_4$ werden verschiedene Videosignale zugeführt. Die Ausgänge dieser Modulatoren $M_1 \ldots M_4$ sind jeweils über einen insbesondere als Komparator ausgebildeten Begrenzer $B_1 \ldots B_4$ an einen der Koppelpunkte geführt. Es ist nämlich günstig, wenn der Nulldurchgang des Signales der Schaltzeit des Verknüpfungsgliedes entsprechend schnell durchfahren wird. Dies erreicht man bei FM und PM, insbesondere durch Übergang auf »Rechteck-FM« bzw. »Rechteck-PM« mittels vorangehender Amplitudenbegrenzung und Verstärkung.

Das Halbleiterchip G enthält vier Verknüpfungsglieder, die jeweils als NOR-Glied ausgebildet sind. Bei jedem dieser NOR-Glieder $G_{n1} \ldots G_{n4}$ ist einer der beiden Eingänge an den Ausgang eines der Begrenzer $B_1 \ldots B_4$ und der andere Eingang an eine der Steuerleitungen $St_1 \ldots St_4$ angeschlossen. Ein Logikpegel 1 am Steuereingang sperrt das Verknüpfungsglied, wobei am Ausgang Logikpegel 0 erscheint.

Die Verknüpfungsglieder sind im Hinblick auf eine möglichst kleine Schaltzeit in ECL-Technik aufgebaut und derart beschaffen, daß ihre Ausgänge nach Art einer sogenannten verdrahteten Oder-Schaltung (Wired-Or) bzw. ohne Verwendung eines zusätzlichen Oder-Gliedes unmittelbar parallel geschaltet werden können.

Logikpegel 0 am Steuereingang bewirkt, daß das Verknüpfungsglied für das durchzuschaltende Signal als Inverter arbeitet. Ersetzt man die NOR-Glieder durch Und-Glieder, so bewirkt Logikpegel 1 am Steuereingang, daß der Koppelpunkt das Signal durchschaltet.

Die NOR-Glieder $G_{n1} \ldots G_{n4}$ sind ferner mit ihren Ausgängen unmittelbar an den Eingang des optischen Senders $S_n$ geführt.

Bei einem Aufbau mit Oder-Glieder oder NAND-Gliedern in TTL-Technik sind solche mit offenem Kollektorausgang besonders geeignet, da in diesem Fall eine ausgangsseitige Zusammenführung nach Art einer »verdrahteten Und-Schaltung« (Wired-Or) möglich ist.

## Patentansprüche

1. Schaltungsanordnung zum wahlweisen Durchschalten oder Sperren von Signalen hoher Bandbreite mit Hilfe wenigstens eines elektronischen Schalters, wobei dem elektronischen Schalter bzw. wenigstens einem der elektronischen Schalter ein Modulator $(M_1 \ldots M_m)$ vorgeschaltet ist, mit dessen Hilfe ein Träger durch die Signale derart moduliert wird, daß die Information im Zeitpunkt des Nulldurchganges des Trägers liegt, dadurch gekennzeichnet, daß der elektronische Schalter als logisches Verknüpfungsglied ausgebildet ist und daß die elektronischen Schalter Koppelpunkte eines Koppelfeldes sind, bei dem Eingangsleitungen über Koppelpunkte mit Ausgangsleitungen wahlweise verbindbar sind.

2. Schaltungsanordnung nach Anspruch 1, dadurch gekennzeichnet, daß die Signale hoher Bandbreite Videosignale sind.

3. Schaltungsanordnung nach Anspruch 1 oder 2, dadurch gekennzeichnet, daß zwischen der Ausgangsleitung des Koppelfeldes und dem Demodulator jeweils eine Signalübertragungsstrecke gelegen ist.

4. Schaltungsanordnung nach einem der Ansprüche 1 bis 3, dadurch gekennzeichnet, daß die Anzahl der Ausgangsleitungen größer als die Zahl der Eingangsleitungen ist.

5. Schaltungsanordnung nach einem der Ansprüche 1 bis 4, dadurch gekennzeichnet, daß der Modulator $(M_1 \ldots M_m)$ als Frequenzmodulator ausgebildet ist.

6. Schaltungsanordnung nach Anspruch 5, dadurch gekennzeichnet, daß die frequenzmodulierten Signale jeweils über einen optischen Übertragungsweg übertragen werden.

7. Schaltungsanordnung nach einem der Ansprüche 1 bis 4, dadurch gekennzeichnet, daß der Modulator $(M_1 \ldots M_m)$ jeweils ein Phasenmo-

dulator ist.

8. Schaltungsanordnung nach einem der Ansprüche 1 bis 7, dadurch gekennzeichnet, daß dem Modulator ($M_1 \ldots M_m$) jeweils ein Amplitudenbegrenzer ($B_1 \ldots B_4$) nachgeschaltet ist.

9. Schaltungsanordnung nach Anspruch 8, dadurch gekennzeichnet, daß zwischen dem Amplitudenbegrenzer ($B_1 \ldots B_4$) und dem Modulator ($M_1 \ldots M_4$) jeweils ein Verstärker angeordnet ist.

10. Schaltungsanordnung nach einem der Ansprüche 1 bis 9, dadurch gekennzeichnet, daß die Verknüpfungsglieder NOR-Glieder ($G_{n1} \ldots G_{n4}$) in ECL-Technik sind, die ausgangsseitig jeweils nach Art einer verdrahteten Oder-Schaltung an die zugeordnete Ausgangsleitung geführt sind.

## Claims

1. A circuit arrangement for selective switch-through or blocking of high band-width signals with the aid of at least one electronic switch, wherein the electronic switch or at least one of the electronic switches, as the case may be, is preceded by a modulator ($M_1 \ldots M_m$), with the aid of which a carrier is modulated by the signals in such a manner that the information lies at the instants of zero transit of the carrier, characterized in that the electronic switch is designed as a logic element and that the electronic switches are coupling points of a coupling field, whereby input lines can be selectively connected to output lines over said coupling points.

2. A circuit arrangement as claimed in claim 1, characterized in that the high band-width signals are video signals.

3. A circuit arrangement as claimed in claim 1 or 2, characterized in that in each case a signal transmission path is arranged between the output line of the coupling field and the demodulator.

4. A circuit arrangement as claimed in one of claims 1 to 3, characterized in that the number of output lines is larger than the number of input lines.

5. A circuit arrangement as claimed in one of claims 1 to 4, characterized in that the modulator ($M_1 \ldots M_m$) is designed as a frequency modulator.

6. A circuit arrangement as claimed in claim 5, characterized in that in each case the frequency-modulated signals are transmitted over an optical transmission path.

7. A circuit arrangement as claimed in one of claims 1 to 4, characterized in that in each case the modulator ($M_1 \ldots M_m$) is a phase modulator.

8. A circuit arrangement as claimed in one of claims 1 to 7, characterized in that in each case an amplitude limiter ($B_1 \ldots B_4$) is connected following the modulator ($M_1 \ldots M_m$).

9. A circuit arrangement as claimed in claim 8, characterized in that in each case an amplifier is arranged between the amplitude limiter ($B_1 \ldots B_4$) and the modulator ($M_1 \ldots M_m$).

10. A circuit arrangement as claimed in one of claims 1 to 9, characterized in that the logic elements are NOR-elements ($G_{n1} \ldots G_{n4}$) in ECL technology, which at the output side are led to the assigned output lines in accordance with a wired Or-circuit.

## Revendications

1. Circuit pour autoriser, au choix, le passage ou le blocage de signaux à large bande, à l'aide d'au moins un commutateur électronique, du type dans lequel il est prévu, en amont du commutateur électronique ou au moins d'un des commutateurs électroniques, un modulateur ($M_1 \ldots M_m$) à l'aide duquel une porteuse est modulée de telle façon par les signaux que l'information se situe à l'instant du passage de la porteuse par la valeur nulle, caractérisé par le fait que le commutateur électronique est réalisé sous la forme d'un circuit combinatoire logique et que les commutateurs électroniques sont des points de couplage d'un champ de couplage dans lequel des conducteurs d'entrée sont susceptibles d'être reliés, au choix, avec des conducteurs de sortie, par l'intermédiaire de points de couplage.

2. Circuit selon la revendication 1, caractérisé par le fait que les signaux sont des signaux vidéo de très grande largeur de bande.

3. Circuit selon la revendication 1 ou 2, caractérisé par le fait qu'entre le conducteur de sortie du champ de couplage et le démodulateur est respectivement située une voie de transmission des signaux.

4. Circuit selon l'une des revendications 1 à 3, caractérisé par le fait que le nombre des conducteurs de sortie est supérieur au nombre des conducteurs d'entrée.

5. Circuit selon l'une des revendications 1 à 4, caractérisé par le fait que le modulateur ($M_1 \ldots M_m$) est réalisé sous la forme d'un modulateur en fréquence.

6. Circuit selon la revendication 5, caractérisé par le fait que les signaux modulés en fréquence sont respectivement transmis par l'intermédiaire d'une voie de transmission optique.

7. Circuit selon l'une des revendications 1 à 4, caractérisé par le fait que le modulateur ($M_1 \ldots M_m$) est un modulateur de phases.

8. Circuit selon l'une des revendications 1 à 7, caractérisé par le fait qu'à chaque modulateur ($M_1 \ldots M_m$) est relié, en montage aval, un limiteur d'amplitude ($B_1 \ldots B_4$).

9. Circuit selon la revendication 8, caractérisé par le fait qu'entre le limiteur d'amplitude ($B_1 \ldots B_4$) et le modulateur ($M_1 \ldots M_4$) est disposé un amplificateur.

10. Circuit selon l'une des revendications 1 à 9, caractérisé par le fait que les circuits combinatoires logiques sont des circuits NI ($G_{n1} \ldots G_{n4}$) en technique ECL, qui mènent, du côté sortie, respectivement et suivant un circuit monté en OU, au conducteur de sortie associé.

# FIG 1

# FIG 2